# EUROPEAN PATENT APPLICATION

(11) **EP 1 375 257 A2**
(43) Date of publication of application: **02.01.2004**
(21) Application number: 03253286.3
(22) Date of filing: 24.05.2003
(51) Int. Cl.: B60R 13/10

(54) **Manufacture of signs**

(30) Priority: 25.05.2002 GB 0212113
(71) Applicant: SIGNAM LIMITED, Warwick, CV34 5FY (GB)
(72) Inventor: Gray, Derick, Bearley, Stratford on Avon, CV37 0EX (GB); Gray, Stephen John, Warwick, CV35 9EE (GB)
(74) Representative: Hallam, Arnold Vincent

(57) **Abstract**

The present invention provides a method of and system for manufacturing a vehicle registration number plate comprising a microprocessor, a first database for storing predetermined templates defining the layout of information to be displayed on the panel, a memory for receiving the information, input enabling a user to input the information to the memory, a display for displaying the information in the defined layout, a laser printer for printing the information in the defined layout on a selected medium, and a second database for storing the printed information. The microprocessor is operable to compare input information prior to printing with the information stored in the second database and generate a warning when the comparison indicates a match.

## Description

The present invention relates to the manufacture of signs and in particular to the printing of vehicle registration plates.

A conventional registration plate uses an opaque reflective or retro-reflective backing sheet on which the numbers and letters which form the vehicle registration number are applied. This is then covered with a sheet of transparent plastics material. The transfers which form the letters and numbers are relatively expensive and the manufacturing process requires the accurate alignment of them on the reflective sheet. An alternative method of applying the indicia involves thermal transfer printing.

The present invention seeks to provide an improved method of manufacturing display panels.

Accordingly, the present invention provides a method of manufacturing a display panel comprising: providing a transparent first layer, and a second layer; instructing a laser printer (10) to print a preselected design on one ofthe transparent first layer and the second layer; and laminating the intermediate layer and the second layer with the preselected design visible through the transparent first layer.

In a preferred embodiment of the invention the preselected design is printed on the transparent first layer and the second layer is a substantially rigid supporting layer. Alternatively, the preselected design is printed on the second layer and the transparent first layer is a substantially rigid supporting layer.

Advantageously, the second layer comprises a sheet of reflective or retro-reflective plastics material and is either open or enclosed bead reflective material.

Preferably, the preselected design is a vehicle registration number plate and the method further comprises providing a database of preset dimensions conforming to statutory requirements and selecting the plate dimensions from said database.

Advantageously, a database of previously printed number plates is provided and the method comprises comparing said preselected number plate with said previously printed number plates and generating a warning in response to said comparison locating an identical number plate.

Indicia on said number plate is printed in half tones in a single pass through said printer.

The present invention also provides a system for manufacturing a display panel comprising: a microprocessor; first database means for storing predetermined templates defining the layout of information to be displayed on said panel; memory means for receiving said information; input means enabling a user to input said information to said memory means; display means for displaying said information in said defined layout; laser printer means for printing said information in said defined layout on a selected medium; second database means for storing said printed information; and wherein said microprocessor means is operable to compare input information prior to printing with said information stored in said second database and generate a warning when said comparison indicates a match.

In a preferred system said display panel is a vehicle registration number plate. Said printer means has a feed tray for receiving medium on which said information is to be printed and said feed tray has guide means for guiding feeding of said medium into said printer during printing. Said guide means comprises opposed parallel guides and said tray has adjusting means for enabling adjustment of the lateral position of said guides towards and away from one another. The arrangement of said adjusting means and said guide means is such that actuation of said adjusting means causes said guides to move laterally in unison towards and away from one another.

The present invention is further described hereinafter, by way of example only, with reference to the accompanying drawings in which:
Figure 1 shows a preferred system for creating a vehicle registration number plate;
Figure 2 shows a simplified flow chart which illustrates the options available to, and general procedures followed by, a user of the system for creating a vehicle registration number plate;
Figure 3 shows an exploded view of an input tray for a printer employed in the system for creating a vehicle registration number plate;

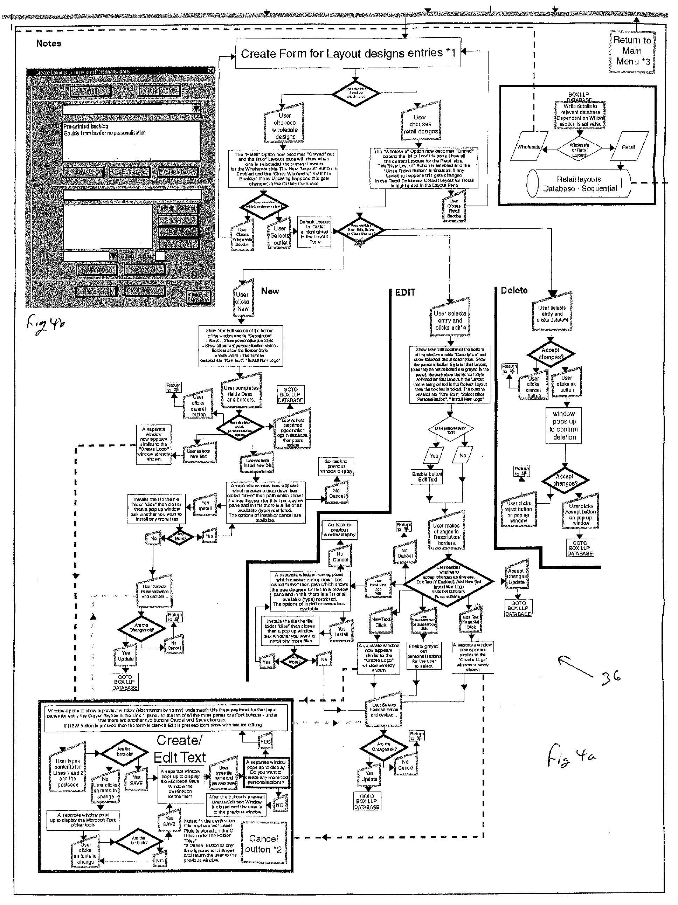

Figure 4 shows a flow chart for selection of a layout design option and an image of associated data entry form;

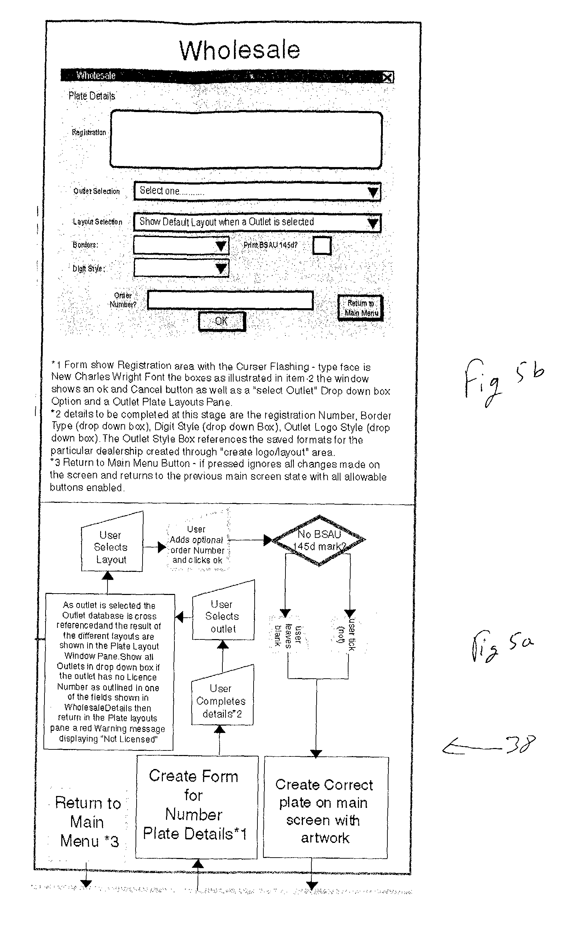

Figure 5 shows a flow chart for selection of a wholesale plate option and an image of associated data entry form;

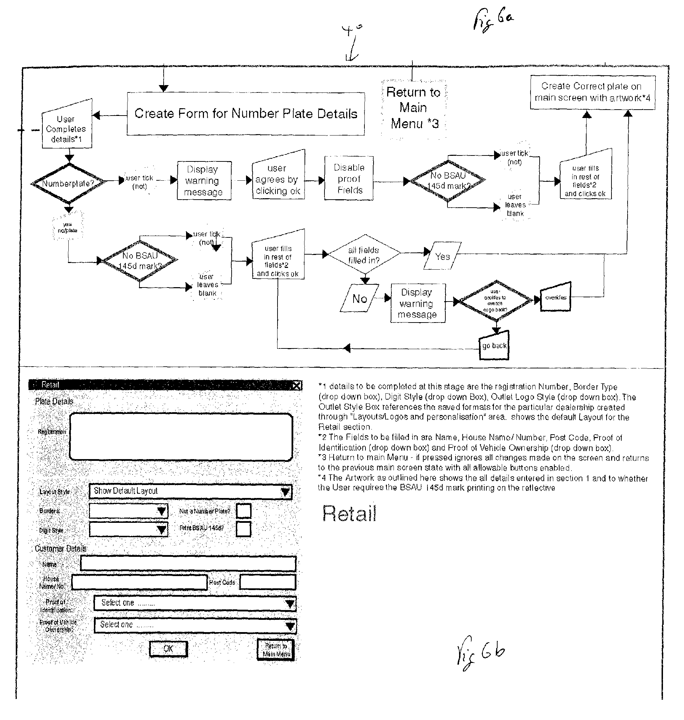

Figure 6 shows a flow chart for selection of a retail plate option and an image of associated data entry form;

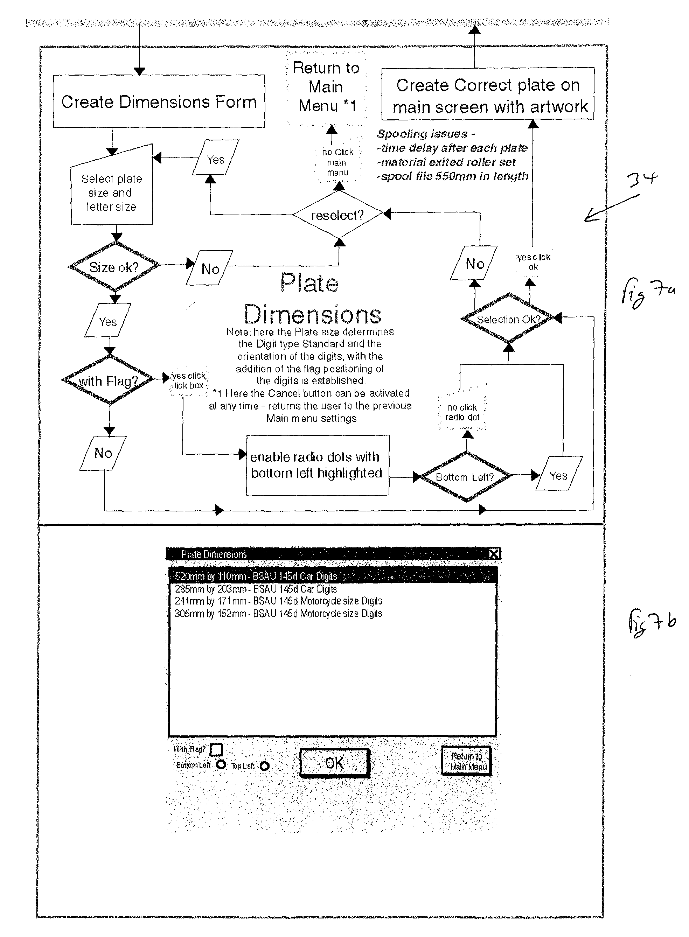

Figure 7 shows a flow chart for selection of a select plate dimensions option and an image of associated data entry form;

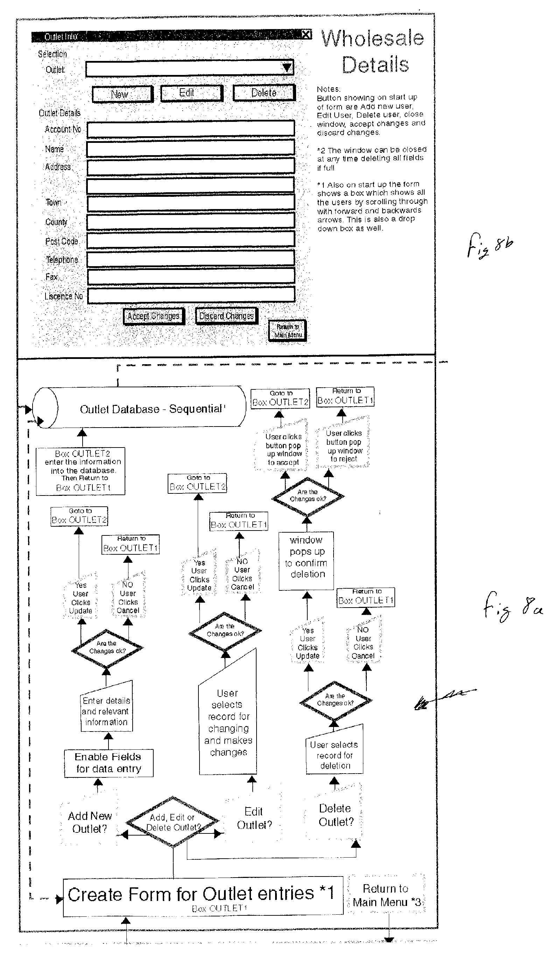

Figure 8 shows a flow chart for selection of an outlet details option and an image of associated data entry form;

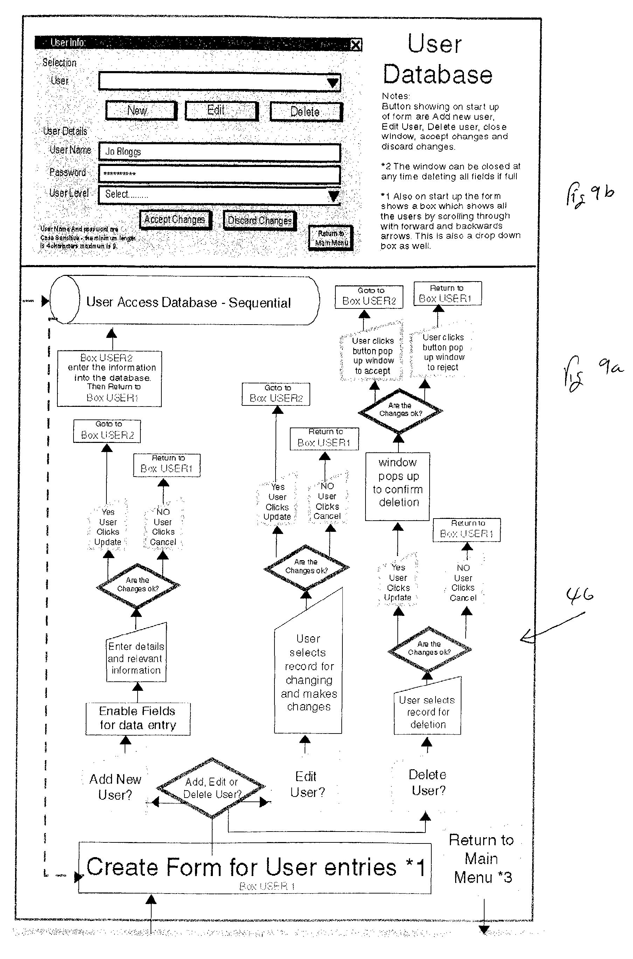

Figure 9 shows a flow chart for selection of a user details option and an image of associated data entry form;

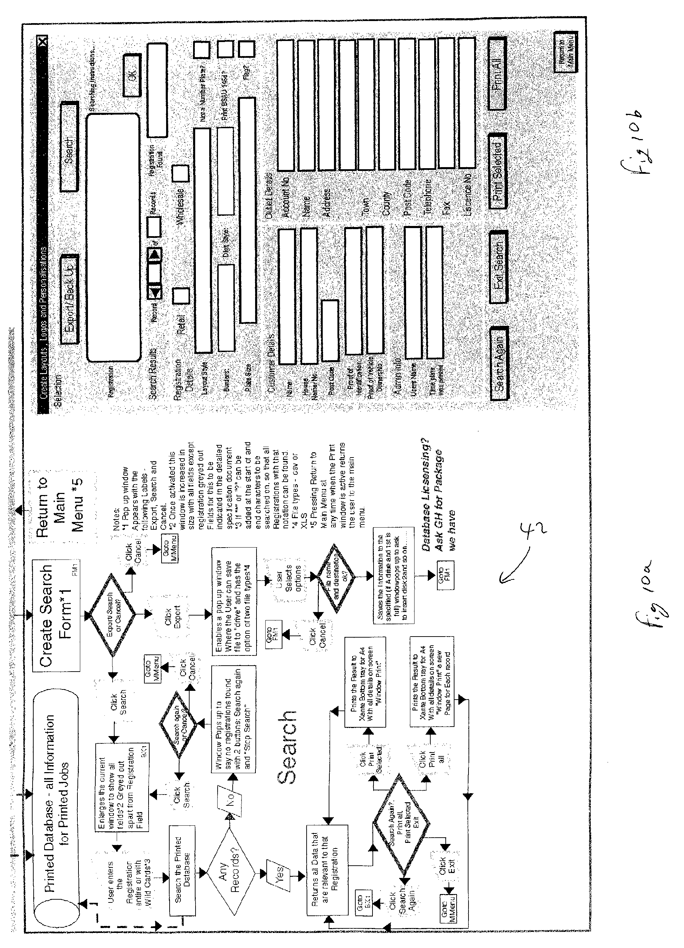

Figure 10 shows a flow chart for selection of a search / export option an image of associated data entry form;

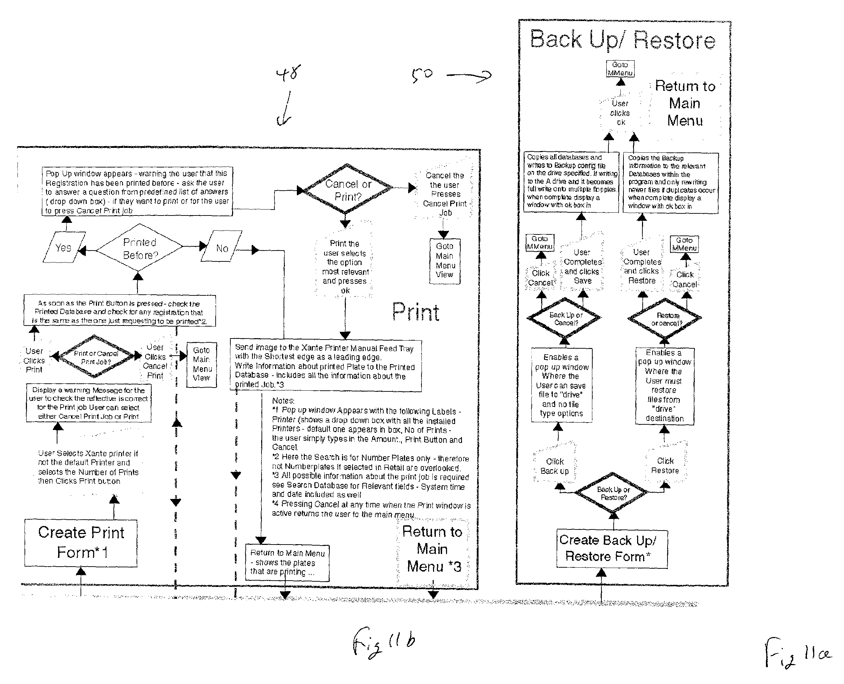

Figure 11 shows flow charts for selection of backup / restore or printing options; and

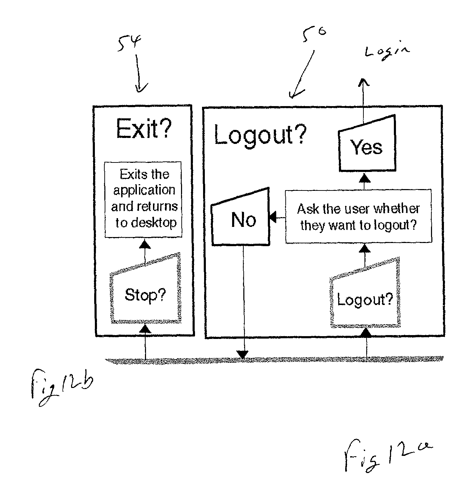

Figure 12 shows flow charts for selection of logout or exit options.

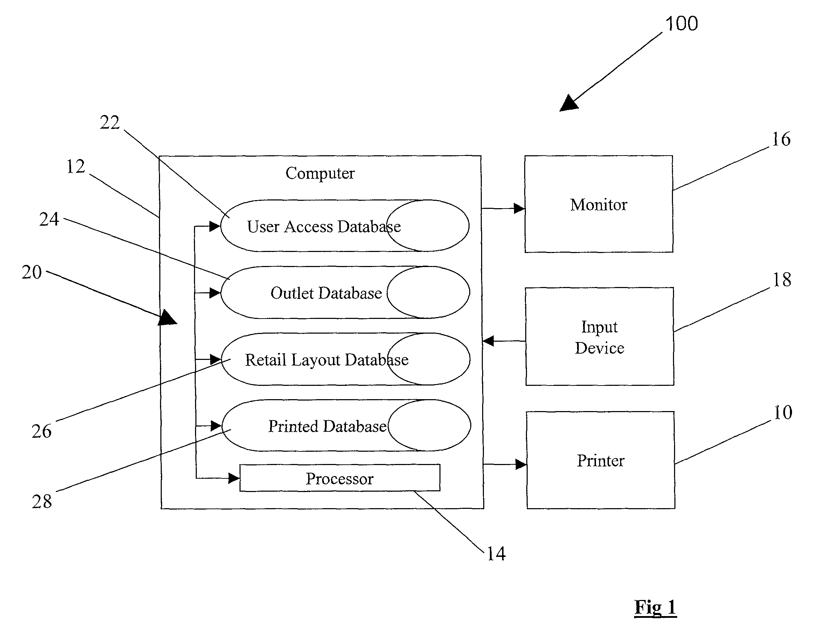

As seen in figure 1 a system for creating a vehicle registration number plate is shown generally at 100 and comprises a printer 10 such as laser printer, one example being the Xanté Accel-a-Writer, which is connected to a computer 12 with a processor 14 running a program for creating a number plate design on a monitor screen 16 in response to user input from an input device 18. The computer also contains, or has access to, a number of databases 20 which can be accessed by the program during manufacture of the display panel.

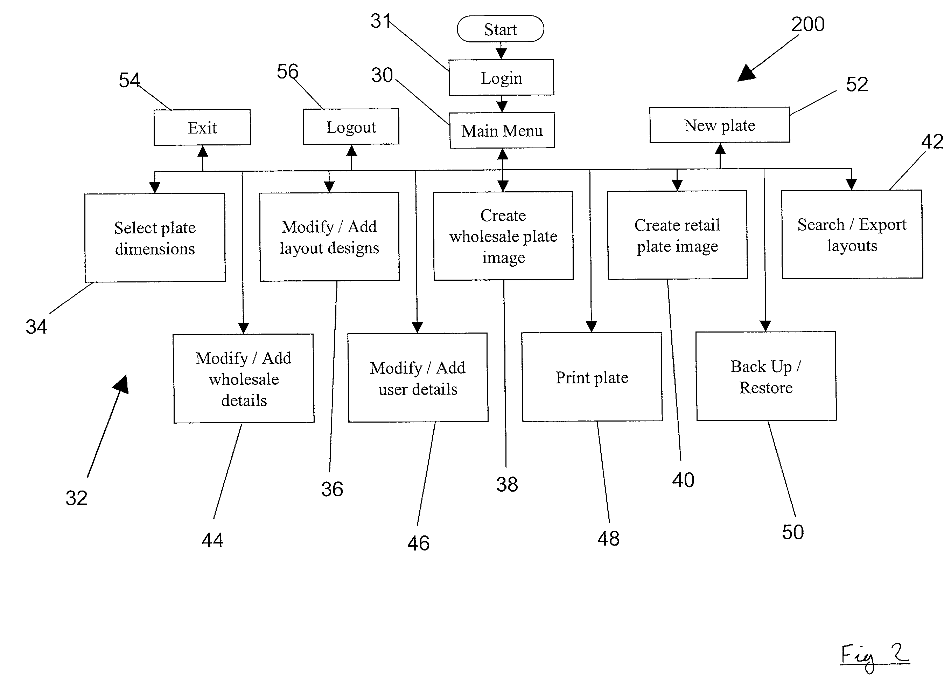

In figure 2 a flow chart is designated generally at 200. The procedure illustrated in the flow chart is implemented in the program running on the processor of the computer. In order to begin creating a number plate a user initially has to go through a login step 31 during which the user is required to enter login data including a login name and a password. Once the user has entered the login data, the processor compares the login data entered against user information available in a user database 22. If the login data is found to have a corresponding match in the user database 22 then the user is successfully logged on. If no match is found then the user is prompted to reenter the login data and the login step 31 is repeated until matching user information is found.

After successful login, the user gains access to a menu 30 which details a number of available options 32. The available options include: a select plate dimensions option 34; a layout design option 36; a wholesale plate option 38; a retail plate option 40; a search / export option 42; an outlet details option 44; a user details option 46; a plate printing option 48; a backup / restore option 50; a new plate option 52; an exit option 54; and a logout option 56.

It will be appreciated that although a number of options 32 are described, the menu 30 may include other options or a subset of the options described.

If the user selects the layout design option 36, a layout design form is provided which allows the user to modify, delete or create new layouts, logos and personalisations. Each layout contains specific information about a style ofplate, such as, for example, the logos, borders, personalised text or backing material used. The border styles, additional images and any other personalisation may be of any colour or combination of colours.

The layout form is provided with means for the user to select layouts for 'wholesale' or 'retail' supply. Depending on the users choice of supply a different set of alternative layouts and options is made available. In the case of whole sale supply the user is also given a choice from a list of wholesale outlets. On selection of a specific wholesale outlet the list of alternative layouts is narrowed down to the default layouts for that particular outlet. The user may then select a layout from those available on the list and choose to either modify or delete it. Alternatively the user can choose to create a completely new layout.

In the case of retail supply, changes arising from the addition of a new layout, modifications to an existing layout or layout deletions are applied to a retail layout database 26. In the case of wholesale supply all such changes are applied to an outlet database 24 which contains information relating to wholesale outlets.

On selection of the wholesale plate option 38 from the menu 30 a wholesale registration setup form is provided with a registration field into which the user can enter a vehicle registration number for the number plate being manufactured. The form allows a choice of border and digit styles and whether or not the number plate should carry the BSAU 145d standards mark. The user can also use the wholesale registration setup form to select the wholesale outlet for which the number plate is being printed and, depending on the outlet selected, choose a layout from a list of default outlet specific layout designs. Typically, the digit styles available include standard style full-tone digits, half-tone '3D effect' digits, hi-line digits and carbon style digits.

On the closure of the wholesale registration setup form after the user has entered the data required, the program generates a preview of the number plate for the user to check prior to printing.

Similarly selection of the retail plate option 40 from the menu 30 results in a retail registration setup form being provided. As with wholesale registration the retail registration setup form contains a registration field into which the user can enter a vehicle registration number, and means for selecting border and digit styles, and whether or not the BSAU 145d standards mark should be present. The user can also use the retail registration setup form to select a layout from a list of default layout designs. Additionally the registration setup form has customer specific fields which allow the user to record customer information, such as name and address, and security information such as the proof of identity and vehicle ownership supplied.

When the user closes the retail registration setup form after entry of the required data, the program generates a preview of the number plate, on the monitor screen 16, for the user to check prior to printing.

On selection of the select plate dimensions option 34 aplate dimensions form is provided which allows the user to select from a number of preset sets of dimensions, which conform to statutory requirements. The plate dimensions form also allows the user to designate the presence and location of a national flag, if required. The data entered using the plate dimensions form determines the size and position of the digits making up the registration number.

When the user closes the plate dimensions form after entry of the required data, the program generates a preview of the number plate, on the monitor screen 16, for the user to check prior to printing.

Selection of the plate printing option 48 allows the user to print the number plate. Standard printing options are made available such as, for example, printer selection if applicable. After selection of any appropriate printing options, the user can initiate a print sequence. On initiation of the print sequence, a printed database 28, which contains information about registration plates that have already been manufactured, is searched for any identical number plates previously printed. If an identical number plate is found a warning is displayed, and the user is given the option to cancel the print. Otherwise, the number plate is printed via the printer 10.

On selection of the outlet details option 44, an outlet information form is provided which allows the user to add, edit or delete information about wholesale outlets to or from the outlet database 24. Typically the information made available for editing from the outlet database 24 includes name, address, account details and the outlet's official license number, if any.

Similarly the user details option 46 provides a user information form which allows the user to add, edit or delete information about users to or from the user database 22. Access to the user database is restricted to users who have been allocated a high enough security level.

The search / export option 42 allows the user to search a printed database 28. The information available for search in the printed database 28 includes, where applicable, customer information, outlet information, registration details and administrative information. The search / export option also allows the user to export information relating to a number plate to an external file such as, for example, a spreadsheet file or a comma delimited text file.

The backup / restore option 50 allows the user to backup or restore the databases 20 to or from an appropriate storage medium respectively.

The new plate option 52 clears the details of any number plate currently in progress and any preview generated for it.

The logout option 56 exits the current session after requesting confirmation from the user. After confirmation is received the program returns to the login step 31 so that a different user may login.

The exit option 54 exits the program completely.

In order to manufacture anew number plate, therefore, the user will select from the options 32 in an appropriate order and enter any required data as needed. Typically, for example, the user will begin by selecting the wholesale or retail plate options 38, 40. The user will then set out, on the display screen, the numbers and letters in the correct order for the number plate. At this stage the user also selects an appropriate pre-defined layout design and other layout options such as choosing to include the BSAU 145d standards mark.

The user then sets the plate dimensions, using the plate dimensions option 34, and the software automatically sizes the characters according to the number plate dimensions and the statutory requirements. For example, if the dimensions which are entered indicate that the number plate is square then the characters are automatically arranged in the required number of rows to fit the dimensions.

Once this step has been completed and the preview generated has been checked, the user prints the previewed number plate, using the print plate option 48.

In order for printing to be successful a sheet of print media of a weight and flexibility suitable to enable the sheet to pass through the printer 10 is provided. Typically, for example, the material will be a reflective or retro-reflective plastic of which the reflective plastic maybe open or enclosed bead reflective or alternatively prismatic. Alternatively, the print media may be a transparent plastic material.

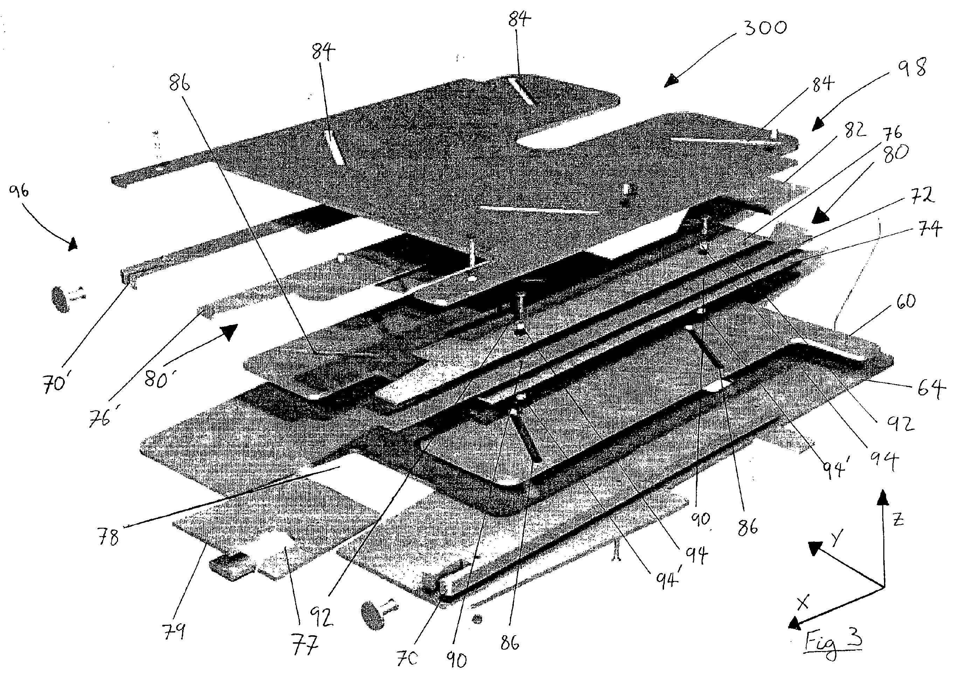

The number plate is printed onto the print media which is fed into the printer 10 using an input tray 300 as seen in figure 3. The whole design, including additional images in any number of shades or colours, maybe printed in a single printing step. This provides an advantage over existing number plate manufacture in which each colour and shade has to be printed in a separate printing step.

It will be appreciated that the above process applies equally to any design to be printed on reflective plastics sheeting, or any other suitable material, and can encompass, for example, signs, labels and other types of information display panels such as signposts and notices.

In order to complete the process and provide some protection for the printed surface the sheet of print media is laminated. If the print media is reflective or retro-reflective plastic material, or the like, the printed surface may be covered with a protective layer such as a transparent plastics material. In such circumstances the protective layer can be a substantially rigid support layer. The term "rigid" used here in the sense that it is applied to existing number plates where the plate is resilient to a degree but is essentially self-supporting. Alternatively, if the print media is a transparent plastic material, this maybe laminated to an intermediate or second layer of material such that the printed design is in contact with the intermediate or second layer and visible through the transparent plastic material. The second layer may also be a substantially rigid support layer. Where the non-printed layer is not sufficiently rigid to act as a support layer a substantially rigid backing layer can be provided.

The input tray 300 includes a tray base 64, and a tray top 62 vertically spaced (Z-direction) from the tray base 64 by two runners 70, 70' sandwiched between the tray base 64 and tray top 62. The runners are located transversely (Y-direction) substantially at either edge of the tray base 64 and tray top 62 as seen in figure 3, to form a longitudinal (X-direction) aperture of substantially rectangular cross-section. A plurality of holes are provided in the tray base 64, tray top 62 and runners 70, 70' to allow the fixing of the tray top 62 to the runners 70, 70' and the tray base 64 using suitable fixing means.

The tray top 64 is also provided with four long narrow tray apertures 84 located substantially at each corner, and angled relative to the transverse axis. The tray apertures are positioned symmetrically relative to the central longitudinal axis of the input tray 300, such that the tray apertures on either side of the longitudinal axis converge in the X-direction.

The dimensions and shape of the tray top 62, tray base 64 and runners 70, 70' are such, that when assembled the input tray 300 has an output end 96 which engages with a paper feed port on the printer 10 and an input end 98 into which the print media may be fed.

The tray base 64 is also provided with a sloped portion 82, at the input end and with abase inset 78 at the output end 98. The sloped portion 82 is angled to receive the print media and may also be provided with a flexible slider (not shown) to assist passage of the print media into the input tray 300. A riser 79 is hingedly mounted into the base inset 78 such that when the input tray 300 is in use, engaged in the paper feed port, the riser 79 slopes to assist passage of the print media from the input tray 300 into the paper feed port of the printer.

Typically the paper feed port of the printer 10 will have a media detection flag switch (not shown). Hence, the riser 79 is provided with a riser inset 77 which is positioned such that when the input tray 300 is in use, engaged in the paper feed port, the flag switch is located within the riser inset 77.

The input tray 300 is also provided with an adjustable width media guide located within the aperture between the tray base 64 and the tray top 62. The media guide comprises a guide base 60 and two guide rails 80, 80' located above the guide base, symmetrically on either side of the longitudinal central axis.

The guide base 60 is provided with four long narrow guide apertures 86, located substantially at each comer, and angled relative to the transverse axis. The guide apertures 86 are of similar dimensions to the tray apertures 84 and are positioned symmetrically at the same distance relative to the central longitudinal axis. However, the guide apertures 86 are positioned such that the guide apertures 86 on either side of the longitudinal axis diverge in the X-direction.

The guide base 60 is located on the tray base 64 and is longitudinally slidable between a first position and a second position. In the first position the innermost point of the guide apertures 86 lie vertically below the innermost point of the tray apertures 84. In the second position the outermost point of the guide apertures 86 lie vertically below the outermost point of the tray apertures 84.

The guide rails 80, 80' comprise a number of rail components including a rail top 76, 76' spaced vertically above a rail base 74,74' by a rail middle 72, 72'. The rail middle 72,72' is narrower than the rail top 76, 76' and the rail base 74, 74'. The components of each guide rail 80, 80' are rigidly fixed with their outer longitudinal edges being coincident such that the rail top 76, 76' and rail base 74, 74' protrude from rail middle 72, 72' toward the other guide rail 80, 80'.

Each guide rail 80, 80' includes two vertical holes 90 through which bolts 92 are inserted, via nuts 94, 94', projecting both above and below the rail. The holes 90 are positioned such that the two nuts 94 which project above each guide rail engage with corresponding tray apertures 84 and the two nuts 94' which project below each guide rail engage with corresponding guide apertures 86.

In operation, therefore, longitudinal movement ofthe guide base 60 between the first position and the second position compels the guide rails to move apart transversely as the nuts 90, 94' are forced to move within the tray and guide apertures 84, 86 from the innermost point to the outermost point. Hence, the position of the guide rails maybe adjusted and different widths of print media may be accommodated and therefore printed on.

It will be appreciated that although the input tray 300 has been described with an adjustable media guide, a less complex, fixed width media guide could also be used. A fixed width media guide is of benefit in situations where display plates of a specific width are mass produced and hence adjustability is not essential.

When the tray is in use, print media is fed into the input end 98 of the input tray 300, via the media guide and the output end 96, into one of the paper feed ports of the printer.

The components of the input tray 300 and in particular the media guide are designed to high tolerances to give a high level reproducibility in the positioning of print media. The reproducibility is such that, in use, a sheet of print media may be re-inserted, after printing, and over-printed to correct omissions or areas of poor quality print.

The described process and apparatus enables number plates and other display panels to be produced at a significantly lower cost than conventional manufacturing processes.

## Claims

1. A method of manufacturing a display panel comprising:
providing a transparent first layer, and a second layer;
instructing a laser printer (10) to print a preselected design on one of the transparent first layer and the second layer;
and laminating the intermediate layer and the second layer with the preselected design visible through the transparent first layer.

2. A method according to claim 1 in which the preselected design is printed on the transparent first layer.

3. A method according to claim 2 in which the second layer is a substantially rigid supporting layer

4. A method according to claim 1 in which the preselected design is printed on the second layer.

5. A method according to claim 4 in which the transparent first layer is a substantially rigid supporting layer.

6. A method according to any of claims 1 to 5 in which the second layer comprises a sheet of reflective or retro-reflective plastics material.

7. A method according to claim 6 in which the reflective material is either open or enclosed bead reflective material.

8. A method according to any of claims 1 to 7 in which the preselected design is a vehicle registration number plate.

9. A method according to claim 8 further comprising providing a database of preset dimensions conforming to statutory requirements and selecting the plate dimensions from said database.

10. A method according to claim 8 or 9 further comprising providing a database of previously printed number plates, comparing said preselected number plate with said previously printed number plates and generating a warning in response to said comparison locating an identical number plate.

11. A method according to claim 8, 9 or 10 wherein indicia on said number plate is printed in half tones in a single pass through said printer.

12. A system for manufacturing a display panel comprising:
a microprocessor;
first database means for storing predetermined templates defining the layout of information to be displayed on said panel;
memory means for receiving said information;
input means enabling a user to input said information to said memory means;
display means for displaying said information in said defined layout;
laser printer means for printing said information in said defined layout on a selected medium; second database means for storing said printed information;
and wherein said microprocessor means is operable to compare input information prior to printing with said information stored in said second database and generate a warning when said comparison indicates a match.

13. A system as claimed in claim 12 wherein said display panel is a vehicle registration number plate.

14. A system as claimed in claim 12 or 13 wherein said printer means has a feed tray for receiving medium on which said information is to be printed and said feed tray has guide means for guiding feeding of said medium into said printer during printing.

15. A system as claimed in any of claims 12 to 14 wherein said guide means comprises opposed parallel guides and said tray has adjusting means for enabling adjustment ofthe lateral position of said guides towards and away from one another.

16. A system as claimed in claim 15 wherein the arrangement of said adjusting means and said guide means is such that actuation of said adjusting means causes said guides to move laterally in unison towards and away from one another.
